# EUROPEAN PATENT APPLICATION

(11) **EP 4 358 355 A1**
(43) Date of publication of application: **24.04.2024**
(21) Application number: 23200851.6
(22) Date of filing: 29.09.2023
(51) Int. Cl.: H02J 7/00, H02J 7/34, H02M 1/32, H02M 3/00, H02M 1/00, H02M 3/335

(54) **ENERGY STORAGE MODULE AND ENERGY STORAGE SYSTEM**

(30) Priority: 21.10.2022 CN 202211295176
(71) Applicant: DELTA ELECTRONICS (SHANGHAI) CO., LTD, Shanghai 201209 (CN)
(72) Inventor: Zhang, Tengshen, Shanghai, 201209 (CN); Zhang, Jinfa, Shanghai, 201209 (CN); Zhong, Linfeng, Shanghai, 201209 (CN); Wang, Changyong, Shanghai, 201209 (CN); Wang, Yafeng, Shanghai, 201209 (CN)
(74) Representative: Uexküll & Stolberg

(57) **Abstract**

An energy storage module (1, 1a, 1b, 1c, 1d, 1e) includes a bus connection part (2), a battery pack (3), a capacitor (Cb) and a series compensation DC conversion device (4). A first conduction terminal (41) of the series compensation DC conversion device (4) is electrically connected with a positive bus connection terminal (21) and a negative bus connection terminal (22) of the bus connection part (2), or the first conduction terminal (41) is connected with a battery positive terminal (31) and a battery negative terminal (32) of the battery pack. A second conduction terminal (42) of the series compensation DC conversion device (4) is electrically connected with two terminals of the capacitor (Cb). A four-quadrant DC/DC converter (44, 44a) of the series compensation DC conversion device (4) controls the capacitor (Cb) to generate a compensation voltage (Vcb) to compensate a voltage between the two terminals of the battery pack, or the four-quadrant DC/DC converter (44, 44a) adjusts a current flowing through the battery pack to a set value.

## Description

### FIELD OF THE INVENTION

The present disclosure relates to a field of energy storage, and more particularly to an energy storage module and an energy storage system.

### BACKGROUND OF THE INVENTION

Energy storage systems have broad application prospects, including rail transit, electric power, new energy, electric vehicles and highpower transmission. Moreover, a plurality of battery packs in the energy storage system are electrically coupled to a DC bus at the same time. The voltage difference between the plurality of battery packs will cause a circulating current between the battery packs. Consequently, the power loss increases, and the lifespans of the battery packs reduce.

In order to avoid the above problems, the energy storage system is usually equipped with a full-power DC converter. The full-power DC converter is electrically coupled to the DC bus. By the full-power DC converter, the electric energy provided by the battery pack is converted into a regulated DC voltage. The regulated DC voltage is provided to the DC bus. The positive input terminal and the negative input terminal of the full-power converter are respectively coupled to the two terminals of the battery pack. In addition, the positive output terminal and the negative output terminal of the full-power converter are respectively coupled to the two terminals of the DC bus. Consequently, the electric energy provided by the battery pack is converted. However, due to the connecting method and the controlling method of the full-power converter, the power loss of the energy storage system is high. For example, if the rated voltage of the electrical energy provided by the battery pack is 1000V and the rated current is 100A, the power of the full-power DC converter is 100kW. Moreover, if the conversion efficiency of the full-power DC converter is 99%, its power loss is 1kW. The higher power losses in energy storage system results in higher product cost, lower performance and lower reliability.

Therefore, there is a need of providing an improved energy storage module and an improved energy storage system in order to overcome the drawbacks of the conventional technologies.

### SUMMARY OF THE INVENTION

The present disclosure provides an energy storage module. The energy storage module includes the series compensation DC conversion device. The first conduction terminal of the series compensation DC conversion device is electrically connected with the positive bus connection terminal and the negative bus connection terminal, or the first conduction terminal of the series compensation DC conversion device is electrically connected with the battery positive terminal and the battery negative terminal of the first battery pack. The second conduction terminal of the series compensation DC conversion device is electrically connected with two terminals of the capacitor. The four-quadrant DC/DC of the series compensation DC conversion device converter controls the capacitor to generate the compensation voltage. According to the compensation voltage, the voltage between the battery positive terminal and the battery negative terminal of the first battery pack is compensated, or a current flowing through the first battery pack is adjusted to a set value. When compared with the one-way value, the value of the compensation voltage may be positive or negative according to the technology of the present disclosure. Consequently, the power loss is reduced, and the operating efficiency is enhanced. Moreover, the compensation voltage across the capacitor is relatively lower than the voltage across the two terminals of the first battery pack. In case that the current flowing through the first battery pack by using the series compensation DC conversion device (i.e., the present technology) and the current flowing through the battery pack by using the full-power converter (i.e., the prior technology) are identical, the conversion power used by the series compensation DC conversion device is relatively lower. When the connecting method and the controlling method of the energy storage module of the present disclosure are used, the power loss and the conversion power are reduced. Consequently, the overall performance and the reliability of the energy storage module are enhanced. The current flowing through the battery pack is adjusted to the set value under control of the series compensation DC conversion device. That is, the charging current or the discharging current of the battery pack is controlled to lie within a reasonable range of a charge/discharge curve. Consequently, the battery pack can be rapidly charged or discharged, and the lifespan of the battery pack can be extended.

In accordance with an aspect of the present disclosure, an energy storage module is provided. The energy storage module includes a capacitor, a bus connection part, a first battery pack and a series compensation DC conversion device. The bus connection part includes a positive bus connection terminal and a negative bus connection terminal. The first battery pack is electrically coupled between the positive bus connection terminal and the negative bus connection terminal. The first battery pack includes a battery positive terminal and a battery negative terminal. The series compensation DC conversion device includes a first conduction terminal, a second conduction terminal, a bidirectional isolation-type converter and a four-quadrant DC/DC converter. The first conduction terminal includes a first positive terminal and a first negative terminal. The second conduction terminal includes a second positive terminal and a second negative terminal. The first positive terminal and the first negative terminal are respectively connected with the positive bus connection terminal and the negative bus connection terminal, or the first positive terminal and the first negative terminal are respectively connected with the battery positive terminal and the battery negative terminal. The second positive terminal and the second negative terminal are respectively connected with two terminals of the capacitor. The bidirectional isolation-type converter is electrically connected with the first conduction terminal. The four-quadrant DC/DC converter is electrically connected between the bidirectional isolation-type converter and the second conduction terminal. The four-quadrant DC/DC converter controls the capacitor to generate a compensation voltage to compensate a voltage between the battery positive terminal and the battery negative terminal of the first battery pack, or the four-quadrant DC/DC converter adjusts a current flowing through the first battery pack to a set value. The capacitor is electrically coupled between the positive bus connection terminal and the battery positive terminal, or electrically coupled between the negative bus connection terminal and the battery negative terminal.

In accordance with another aspect of the present disclosure, an energy storage system is provided. The energy storage system includes a power conversion device and a plurality of energy storage modules. The power conversion device includes a power positive terminal and a power negative terminal. Each of the plurality of energy storage modules includes a capacitor, a bus connection part, a first battery pack and a series compensation DC conversion device. The bus connection part includes a positive bus connection terminal and a negative bus connection terminal. The positive bus connection terminal is electrically connected with the power positive terminal. The negative bus connection terminal is electrically connected with the power negative terminal. The first battery pack is electrically coupled between the positive bus connection terminal and the negative bus connection terminal. The first battery pack includes a battery positive terminal and a battery negative terminal. The series compensation DC conversion device includes a first conduction terminal, a second conduction terminal, a bidirectional isolation-type converter and a four-quadrant DC/DC converter. The first conduction terminal includes a first positive terminal and a first negative terminal. The second conduction terminal includes a second positive terminal and a second negative terminal. The first positive terminal and the first negative terminal are respectively connected with the positive bus connection terminal and the negative bus connection terminal, or the first positive terminal and the first negative terminal are respectively connected with the battery positive terminal and the battery negative terminal. The second positive terminal and the second negative terminal are respectively connected with two terminals of the capacitor. The bidirectional isolation-type converter is electrically connected with the first conduction terminal. The four-quadrant DC/DC converter is electrically connected between the bidirectional isolation-type converter and the second conduction terminal. The four-quadrant DC/DC converter controls the capacitor to generate a compensation voltage to compensate a voltage between the battery positive terminal and the battery negative terminal of the first battery pack, or the four-quadrant DC/DC converter adjusts a current flowing through the first battery pack to a set value. The capacitor electrically is coupled between the positive bus connection terminal and the battery positive terminal, or electrically coupled between the negative bus connection terminal and the battery negative terminal.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1A is a schematic circuit diagram illustrating an energy storage module according to a first embodiment of the present disclosure;
FIG. 1B is a schematic circuit diagram illustrating a series compensation DC conversion device of the energy storage module;
FIG. 2A is a schematic circuit diagram illustrating the associated currents of the energy storage module as shown in FIG. 1A in the charging mode when the compensation voltage is positive;
FIG. 2B is a schematic circuit diagram illustrating the associated currents of the energy storage module as shown in FIG. 1A in the charging mode when the compensation voltage is negative;
FIG. 2C is a schematic circuit diagram illustrating the associated currents of the energy storage module as shown in FIG. 1A in the discharging mode when the compensation voltage is positive;
FIG. 2D is a schematic circuit diagram illustrating the associated currents of the energy storage module as shown in FIG. 1A in the discharging mode when the compensation voltage is negative;
FIG. 3 is a control flow diagram of the four-quadrant DC/DC converter in the series compensation DC conversion device of the energy storage module as shown in FIG. 1A;
FIG. 4A is a schematic circuit diagram illustrating an energy storage module according to a second embodiment of the present disclosure;
FIG. 4B is a schematic circuit diagram illustrating a series compensation DC conversion device of the energy storage module;
FIG. 5 is a schematic circuit diagram illustrating an energy storage module according to a third embodiment of the present disclosure;
FIG. 6 is a schematic circuit diagram illustrating an energy storage module according to a fourth embodiment of the present disclosure;
FIG. 7A is a schematic circuit diagram illustrating a first exemplary circuitry topology of the bidirectional isolation-type converter in the series compensation DC conversion device of the energy storage module as shown in FIG. 1A;
FIG. 7B is a schematic circuit diagram illustrating a second exemplary circuitry topology of the bidirectional isolation-type converter in the series compensation DC conversion device of the energy storage module as shown in FIG. 1A;
FIG. 7C is a schematic circuit diagram illustrating a third exemplary circuitry topology of the bidirectional isolation-type converter in the series compensation DC conversion device of the energy storage module as shown in FIG. 1A;
FIG. 8A is a schematic circuit diagram illustrating a first exemplary circuitry topology of the four-quadrant DC/DC converter in the series compensation DC conversion device of the energy storage module as shown in FIG. 1A;
FIG. 8B is a schematic circuit diagram illustrating a second exemplary circuitry topology of the four-quadrant DC/DC converter in the series compensation DC conversion device of the energy storage module as shown in FIG. 1A;
FIG. 9 is a schematic circuit diagram illustrating an energy storage system according to an embodiment of the present disclosure;
FIG. 10A is a schematic circuit diagram illustrating an energy storage module according to a fifth embodiment of the present disclosure; and
FIG. 10B is a schematic circuit diagram illustrating an energy storage module according to a sixth embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. In addition, the term "coupling" used in this disclosure may refer to two or more components in direct physical or electrical contact with each other, or indirect physical or electrical contact with each other, which is not limited in this disclosure.

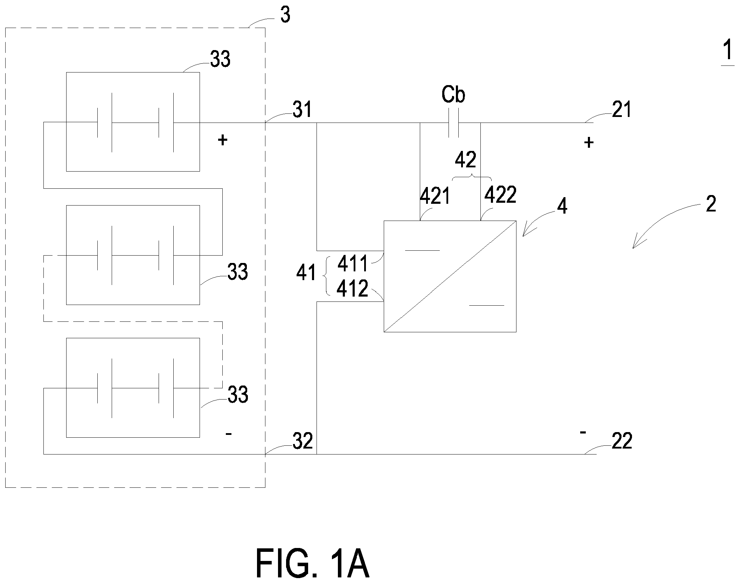

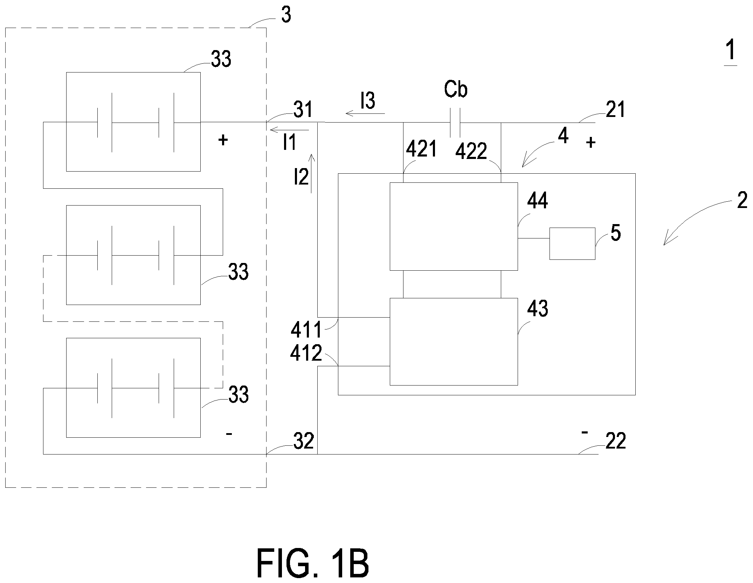

Please refer to FIGS. 1A and 1B. FIG. 1A is a schematic circuit diagram illustrating an energy storage module according to a first embodiment of the present disclosure. FIG. 1B is a schematic circuit diagram illustrating a series compensation DC conversion device of the energy storage module. As shown in FIGS. 1A and 1B, the energy storage module 1 includes a bus connection part 2, a first battery pack 3, a capacitor Cb and a series compensation DC conversion device 4. The bus connection part 2 includes a positive bus connection terminal 21 and a negative bus connection terminal 22. The energy storage module 1 is connected with a DC bus (not shown) through the positive bus connection terminal 21 and the negative bus connection terminal 22 of the bus connection part 2.

The first battery pack 3 is electrically coupled between the positive bus connection terminal 21 and the negative bus connection terminal 22 of the bus connection part 2. The first battery pack 3 includes a battery positive terminal 31, a battery negative terminal 32 and a plurality of batteries 33. The plurality of batteries 33 are serially connected between the battery positive terminal 31 and the battery negative terminal 32. In case that the energy storage module 1 is operated in a discharging mode, the first battery pack 3 provides a discharging electric energy to the DC bus through the battery positive terminal 31 and the battery negative terminal 32. In case that the energy storage module 1 is operated in a charging mode, the first battery pack 3 receives a charging electric energy from the DC bus through the battery positive terminal 31 and the battery negative terminal 32. Moreover, the capacitor Cb is electrically coupled between the positive bus connection terminal 21 and the battery positive terminal 31.

As shown in FIGS. 1A and 1B, the series compensation DC conversion device 4 includes a first conduction terminal 41, a second conduction terminal 42, a bidirectional isolation-type converter 43 and a four-quadrant DC/DC converter 44.

The first conduction terminal 41 includes a first positive terminal 411 and a first negative terminal 412. The first positive terminal 411 is electrically connected with the battery positive terminal 31 of the first battery pack 3. The first negative terminal 412 is electrically connected with the battery negative terminal 32 of the first battery pack 3.

The second conduction terminal 42 includes a second positive terminal 421 and a second negative terminal 422. The second positive terminal 421 and the second negative terminal 422 are electrically connected with two terminals of the capacitor Cb, respectively.

The voltage across the capacitor Cb is controlled by the series compensation DC conversion device 4. In case that the direction of the compensation voltage across the capacitor Cb and the direction of the voltage across the first battery pack 3 are opposite, the second positive terminal 421 is electrically connected with the positive terminal of the capacitor Cb, and the second negative terminal 422 is electrically connected with the negative terminal of the capacitor Cb. Under this circumstance, the second positive terminal 421 is electrically connected with the battery positive terminal 31 of the first battery pack 3, and the second negative terminal 422 is electrically connected with the positive bus connection terminal 21 of the bus connection part 2. Whereas, In other embodiments, in case that the direction of the compensation voltage across the capacitor Cb and the direction of the voltage across the first battery pack 3 are identical, the second positive terminal 421 is electrically connected with the positive terminal of the capacitor Cb, and the second negative terminal 422 is electrically connected with the negative terminal of the capacitor Cb. Under this circumstance, the second positive terminal 421 is electrically connected with the positive bus connection terminal 21 of the bus connection part 2, and the second negative terminal 422 is electrically connected with the battery positive terminal 31 of the first battery pack 3.

In an embodiment, the first conduction terminal 41 is a high voltage side of the series compensation DC conversion device 4, and the second conduction terminal 42 is a low voltage side of the series compensation DC conversion device 4. Moreover, the compensation voltage across the capacitor Cb is relatively lower than the voltage across the two terminals of the first battery pack 3. In case that the current flowing through the first battery pack 3 by using the series compensation DC conversion device 4 (i.e., the present technology) and the current flowing through the battery pack by using the full-power converter (i.e., the prior technology) are identical, the conversion power used by the series compensation DC conversion device 4 is relatively lower. Consequently, the power loss of the energy storage module 1 of the present disclosure is reduced.

As shown in FIG. 1B, the bidirectional isolation-type converter 43 is electrically connected with the first positive terminal 411 and the first negative terminal 412 of the first conduction terminal 41. The four-quadrant DC/DC converter 44 is electrically connected between the bidirectional isolation-type converter 43 and the second conduction terminal 42. The second conduction terminal 42 is electrically connected with the two terminals of the capacitor Cb. The capacitor Cb is electrically connected between the positive bus connection terminal 21 of the bus connection part 2 and the battery positive terminal 31 of the first battery pack 3.

In case that the energy storage module 1 is operated in the discharging mode, the discharging electric energy from the first battery pack 3 is received by the bidirectional isolation-type converter 43 and converted into a transition electric energy by the bidirectional isolation-type converter 43. When the bidirectional isolation-type converter 43 provides the transition electric energy, the compensation voltage across the capacitor Cb is generated under control of the four-quadrant DC/DC converter 44 according to the transition electric energy. Consequently, the voltage between the battery positive terminal 31 and the battery negative terminal 32 of the first battery pack 3 is compensated according to the compensation voltage. The value of the compensation voltage may be positive or negative. That is, the direction of the compensation voltage across the two terminals of the capacitor Cb and the direction of the voltage across the two terminals of the first battery pack 3 are identical or different. In another embodiment, when the bidirectional isolation-type converter 43 provides the transition electric energy, the current flowing through the first battery pack 3 is adjusted to a set value by the four-quadrant DC/DC converter 44 according to the transition electric energy.

In case that the energy storage module 1 is operated in the charging mode, the discharging electric energy from the bus connection part 2 is received by the four-quadrant DC/DC converter 44 and converted into a transition electric energy by the four-quadrant DC/DC converter 44. Then, the transition electric energy is transmitted from the four-quadrant DC/DC converter 44 to the first battery pack 3 through the bidirectional isolation-type converter 43. In addition, the compensation voltage across the capacitor Cb is generated under control of the four-quadrant DC/DC converter 44 according to the discharging electric energy from the bus connection part 2. Consequently, the voltage between the battery positive terminal 31 and the battery negative terminal 32 of the first battery pack 3 is compensated according to the compensation voltage. The value of the compensation voltage may be positive or negative. That is, the direction of the compensation voltage across the two terminals of the capacitor Cb and the direction of the voltage across the two terminals of the first battery pack 3 are identical or different. In another embodiment, the current flowing through the first battery pack 3 is adjusted to the set value by the four-quadrant DC/DC converter 44 according to the discharging electric energy from the bus connection part 2.

As mentioned above, the current flowing through the first battery pack 3 is adjusted to the set value by the four-quadrant DC/DC converter 44 according to the transition electric energy from the bidirectional isolation-type converter 43 or the discharging electric energy from the bus connection part 2. As shown in FIG. 1B, the current I2 flowing through the first conduction terminal 41 and the current I3 flowing through the second conduction terminal 42 are controlled by the four-quadrant DC/DC converter 44 to make the current I1 flowing through the first battery pack 3 be equal to the set value. In FIG. 1B, the first battery pack 3 (or the energy storage module) is in the charging mode and the compensation voltage is positive, the current I2 flows through the first conduction terminal 41, the current 13 flows through the second conduction terminal 42, and the current I1 flows through the first battery pack 3. In the situation of FIG. 1B, the capacitor Cb is in the steady state, the branch voltage of the capacitor Cb is not changed, and no DC current flows through the branch of the capacitor Cb. As a consequence, the sum of the current I2 flowing through the first conduction terminal 41 and the current I3 flowing through the second conduction terminal 42 is equal to the current I1 flowing through the first battery pack 3.

Since the installation positions of the bidirectional isolation-type converter 43 and the four-quadrant DC/DC converter 44 are specially designed, the first conduction terminal 41 and the second conduction terminal 42 of the series compensation DC conversion device 4 are isolated from each other. Consequently, during the operation of the series compensation DC conversion device 4, the short circuit between the two terminals of the first battery pack 3 (i.e., the battery positive terminal 31 and the battery negative terminal 32) and the short circuit between the two terminals of the bus connection part 2 (i.e., the positive bus connection terminal 21 and the negative bus connection terminal 22) will be avoided.

As mentioned above, the energy storage module 1 includes the series compensation DC conversion device 4. The first conduction terminal 41 of the series compensation DC conversion device 4 is electrically connected with the battery positive terminal 31 and the battery negative terminal 32 of the first battery pack 3. The second conduction terminal 42 of the series compensation DC conversion device 4 is electrically connected with the two terminals of the capacitor Cb. In an embodiment, the compensation voltage across the capacitor Cb is generated under control of the four-quadrant DC/DC converter 44 of the series compensation DC conversion device 4, and the voltage between the battery positive terminal 31 and the battery negative terminal 32 of the first battery pack 3 is compensated according to the compensation voltage. In another embodiment, the current flowing through the first battery pack 3 is adjusted to the set value by the four-quadrant DC/DC converter 44. When compared with the connecting method and the controlling method of the conventional energy storage system, the compensation voltage across the capacitor Cb is lower than the voltage across the two terminals of the first battery pack according to the energy storage module of the present disclosure. In case that the current flowing through the first battery pack 3 by using the series compensation DC conversion device (i.e., the present technology) and the current flowing through the battery pack by using the full-power converter (i.e., the prior art technology) are identical, the conversion power used by the series compensation DC conversion device 4 is relatively lower. Consequently, when the connecting method and the controlling method of the energy storage module of the present disclosure are used, the power loss and the conversion power are reduced. Consequently, the overall performance and the reliability of the energy storage module are enhanced. For example, if the rated voltage of the electrical energy provided by the first battery pack 3 is 1000V and the rated current is 100A, the compensation voltage generated by the four-quadrant DC/DC converter 44 of the series compensation DC conversion device 4 is about 100V. Moreover, if the conversion efficiency of the series compensation DC conversion device 4 is 96%, its power loss is 0.4kW. As mentioned above, the power loss of the conventional energy storage system using the full-power converter is 1kW. When compared with the conventional energy storage system, the power loss of the energy storage module 1 of the present disclosure is reduced. Consequently, the overall performance and the reliability of the energy storage module 1 are further enhanced.

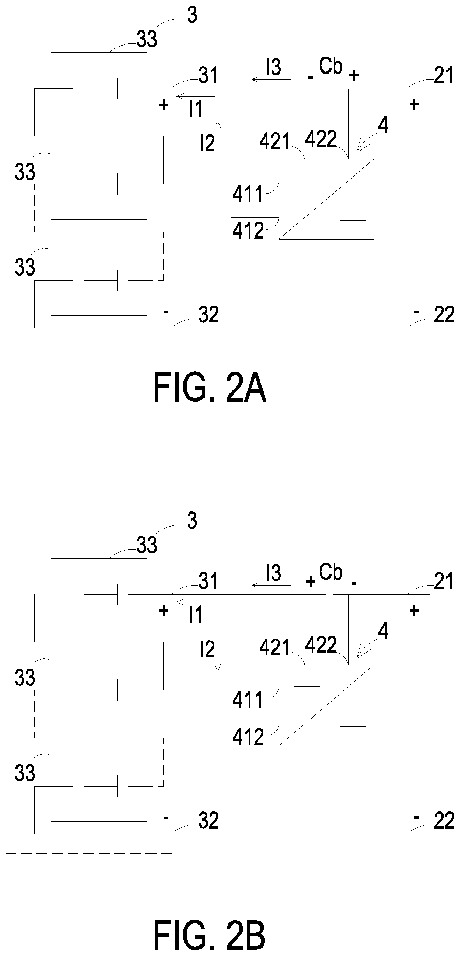

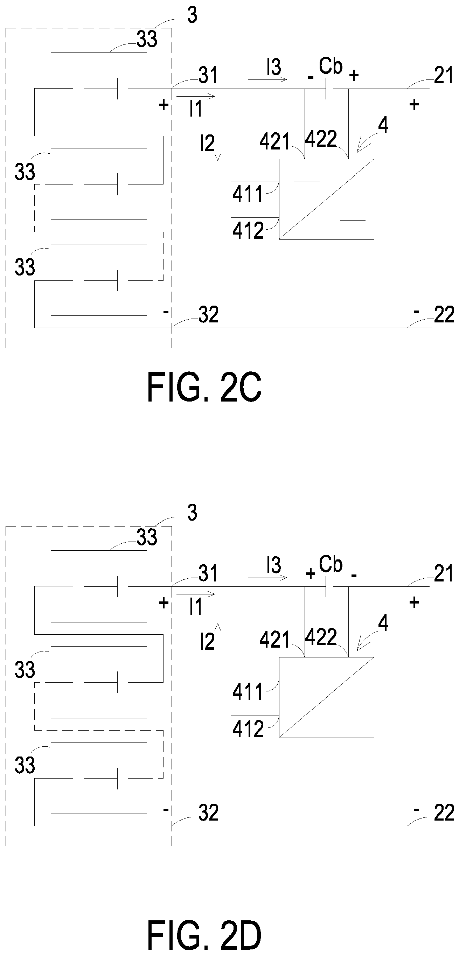

The operations of the energy storage module 1 in the charging mode and the discharging mode will be described with reference to FIGS. 1A, 1B, 2A, 2B, 2C and 2D. FIG. 2A is a schematic circuit diagram illustrating the associated currents of the energy storage module as shown in FIG. 1A in the charging mode when the compensation voltage is positive. FIG. 2B is a schematic circuit diagram illustrating the associated currents of the energy storage module as shown in FIG. 1A in the charging mode when the compensation voltage is negative. FIG. 2C is a schematic circuit diagram illustrating the associated currents of the energy storage module as shown in FIG. 1A in the discharging mode when the compensation voltage is positive. FIG. 2D is a schematic circuit diagram illustrating the associated currents of the energy storage module as shown in FIG. 1A in the discharging mode when the compensation voltage is negative. In FIGS. 2A, 2B, 2C and 2D, I1 represents the current flowing through the first battery pack 3, I2 represents the current flowing through the first conduction terminal 41 of the series compensation DC conversion device 4, and I3 represents the current flowing through the second conduction terminal 42 of the series compensation DC conversion device 4. In this situation, the capacitor Cb is in the steady state, the branch voltage of the capacitor Cb is not changed, and no DC current flows through the branch of the capacitor Cb.

As shown in FIG. 2A, the energy storage module 1 (or the first battery pack 3) is in the charging mode, and the compensation voltage of the capacitor Cb controlled by the four-quadrant DC/DC converter 44 is positive. In addition, the current I1 flowing through the first battery pack 3 is equal to the sum of the current I2 flowing through the first conduction terminal 41 and the current I3 flowing through the second conduction terminal 42. Under this circumstance, the voltage of the DC bus is equal to the sum of the supply voltage from the first battery pack 3 and the compensation voltage of the capacitor Cb. That is, the direction of the voltage between the battery positive terminal 31 and the battery negative terminal 32 of the first battery pack 3 and the direction of the compensation voltage of the capacitor Cb are identical.

As shown in FIG. 2B, the energy storage module 1 (or the first battery pack 3) is in the charging mode, and the compensation voltage of the capacitor Cb controlled by the four-quadrant DC/DC converter 44 is negative. In addition, the current I1 flowing through the first battery pack 3 is equal to the current 13 flowing through the second conduction terminal 42 minus the current I2 flowing through the first conduction terminal 41. Under this circumstance, the voltage of the DC bus is equal to the supply voltage from the first battery pack 3 minus the compensation voltage of the capacitor Cb. That is, the direction of the voltage between the battery positive terminal 31 and the battery negative terminal 32 of the first battery pack 3 and the direction of the compensation voltage of the capacitor Cb are opposite.

As shown in FIG. 2C, the energy storage module 1 (or the first battery pack 3) is in the discharging mode, and the compensation voltage of the capacitor Cb controlled by the four-quadrant DC/DC converter 44 is positive. In addition, the current I1 flowing through the first battery pack 3 is equal to the sum of the current I2 flowing through the first conduction terminal 41 and the current I3 flowing through the second conduction terminal 42. Under this circumstance, the voltage of the DC bus is equal to the sum of the supply voltage from the first battery pack 3 and the compensation voltage of the capacitor Cb. That is, the direction of the voltage between the battery positive terminal 31 and the battery negative terminal 32 of the first battery pack 3 and the direction of the compensation voltage of the capacitor Cb are identical.

As shown in FIG. 2D, the energy storage module 1 (or the first battery pack 3) is in the discharging mode, and the compensation voltage of the capacitor Cb controlled by the four-quadrant DC/DC converter 44 is negative. In addition, the current I1 flowing through the first battery pack 3 is equal to the current I3 flowing through the second conduction terminal 42 minus the current I2 flowing through the first conduction terminal 41. Under this circumstance, the voltage of the DC bus is equal to the supply voltage from the first battery pack 3 minus the compensation voltage of the capacitor Cb. That is, the direction of the voltage between the battery positive terminal 31 and the battery negative terminal 32 of the first battery pack 3 and the direction of the compensation voltage of the capacitor Cb are opposite.

Please refer to FIG. 1B again. In an embodiment, the series compensation DC conversion device 4 further includes a control unit 5. The control unit 5 is electrically connected with the four-quadrant DC/DC converter 44. Under control of the control unit 5, the four-quadrant DC/DC converter 44 generates the compensation voltage on the capacitor Cb, or the current I1 flowing through the first battery pack 3 is adjusted to the set value.

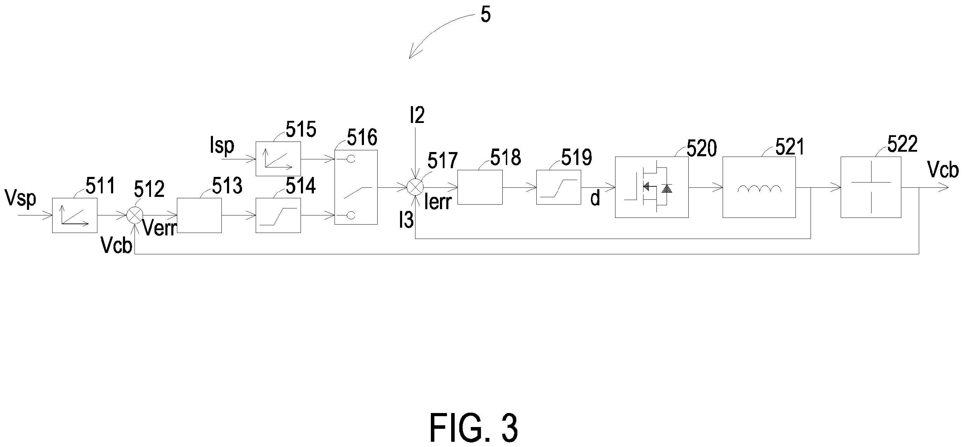

FIG. 3 is a control flow diagram of the four-quadrant DC/DC converter in the series compensation DC conversion device of the energy storage module as shown in FIG. 1A. In case that the energy storage module 1 is operated in a constant current mode, the control unit 5 receives a current command Isp from an external host (not shown). According to the current command Isp, the control unit 5 controls switching element 520 in the four-quadrant DC/DC converter 44. In case that the energy storage module 1 is operated in a constant voltage mode, the control unit 5 receives a voltage command Vsp from the external host. According to the voltage command Vsp, the control unit 5 controls the switching element 520 in the four-quadrant DC/DC converter 44.

The control unit 5 includes a first ramp controller 511, a first comparator 512, a first proportional controller 513, a first amplitude limiter 514, a second ramp controller 515, a selector 516, a second comparator 517, a second proportional controller 518 and a second amplitude limiter 519.

In one embodiment, in case that the energy storage module 1 is operated in the constant current mode, i.e. the current I1 flowing through the first battery pack 3 is adjusted to the set value under control of the control unit 5, the second ramp controller 515 receives the current command Isp from the external host. The current command Isp is converted into a current ramp given value by the second ramp controller 515. The second ramp controller 515 is used for avoiding the step response of the current command Isp. In case that the energy storage module 1 is operated in the constant current mode, the selector 516 receives the current ramp given value from the second ramp controller 515. In addition, the second comparator 517 receives the current ramp given value from the selector 516, the current I2 flowing through the first conduction terminal 41 and the current I3 flowing through the second conduction terminal 42. The current I2 flowing through the first conduction terminal 41 and the current I3 flowing through the second conduction terminal 4 are compared with the current ramp given value by the second comparator 517. Consequently, a comparison current Ierr is generated. The second proportional controller 518 receives and calculates the comparison current Ierr. The second amplitude limiter 519 receives the calculated comparison current Ierr from the second proportional controller 518 and limits the amplitude of the calculated comparison current Ierr. Consequently, a duty cycle d is obtained. According to the duty cycle d, the on/off states of the switching element 520 in the four-quadrant DC/DC converter 44 are controlled to adjust the current flowing through an inductor 521 and control the sum of the current I2 flowing through the first conduction terminal 41 and the current I3 flowing through the second conduction terminal 42 to be the set value. That is, the current I1 flowing through the first battery pack 3 is equal to the set value.

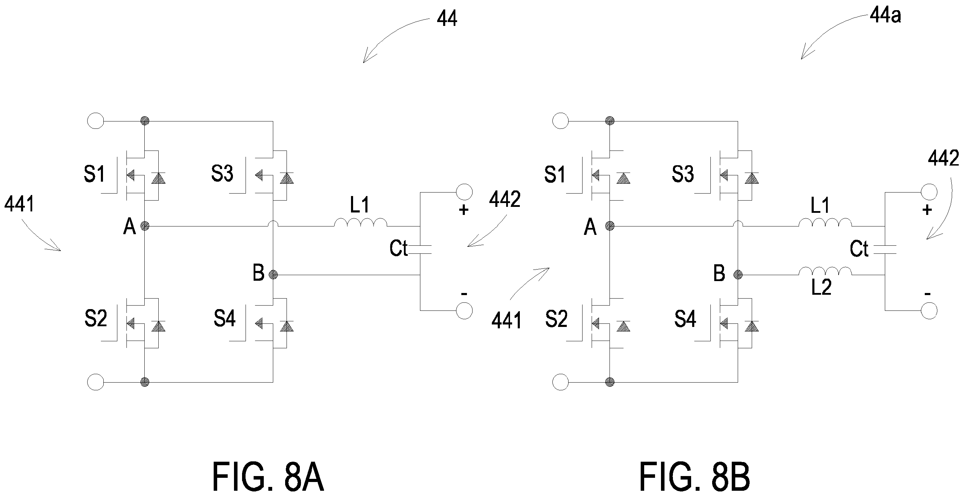

In the above embodiment, the set value for example is the current command Isp. The switching element 520 is the switching element in the four-quadrant DC/DC converter 44. The inductor 521 is the inductor in the four-quadrant DC/DC converter 44. For example, the inductor is the first conversion inductor L1 as shown in FIGS. 8A and 8B. The installation and connection of the switching element and the inductor in the four-quadrant DC/DC converter 44 will be described later.

In one embodiment, in case that the energy storage module 1 is operated in the constant voltage mode, i.e. the four-quadrant DC/DC converter 44 generates the compensation voltage on the capacitor Cb under control of the control unit 5, the first ramp controller 511 receives the voltage command Vsp from the external host. The voltage command Vsp is converted into a voltage ramp given value by the first ramp controller 511. The first ramp controller 511 is used for avoiding the step response of the voltage command Vsp. The first comparator 512 receives the voltage ramp given value from the first ramp controller 511 and a compensation voltage Vcb from an output terminal of the control unit 5. The voltage ramp given value and the compensation voltage Vcb are compared with each other by the first comparator 512. Consequently, an error voltage Verr is generated. The first proportional controller 513 calculates and generates a given current according to the error voltage Verr. The first amplitude limiter 514 limits the amplitude of the given current. In case that the energy storage module 1 is operated in the constant voltage mode, the selector 516 receives the limited given current from the first amplitude limiter 514. The second comparator 517 receives the limited given current from the selector 516, the current I2 flowing through the first conduction terminal 41 and the current I3 flowing through the second conduction terminal 42. The current I2 flowing through the first conduction terminal 41 and the current I3 flowing through the second conduction terminal 4 are compared with the limited given current by the second comparator 517. Consequently, a comparison current Ierr is generated. The second proportional controller 518 receives and calculates the comparison current Ierr. The second amplitude limiter 519 receives the calculated comparison current Ierr from the second proportional controller 518 and limits the amplitude of the calculated comparison current Ierr. Consequently, a duty cycle d is obtained. According to the duty cycle d, the on/off states of the switching element 520 in the four-quadrant DC/DC converter 44 are controlled to adjust the current flowing through the inductor 521 and generate the compensation voltage Vcb on the capacitor Cb by the four-quadrant DC/DC converter 44.

In the above embodiment, the compensation voltage Vcb for example is the voltage command Vsp. The switching element 520 is the switching element in the four-quadrant DC/DC converter 44. The inductor 521 is the inductor in the four-quadrant DC/DC converter 44. For example, the inductor is the first conversion inductor L1 as shown in FIGS. 8A and 8B, the capacitor 522 is the capacitor Cb. The installation and connection of the switching elements, the inductor and the capacitor will be described later.

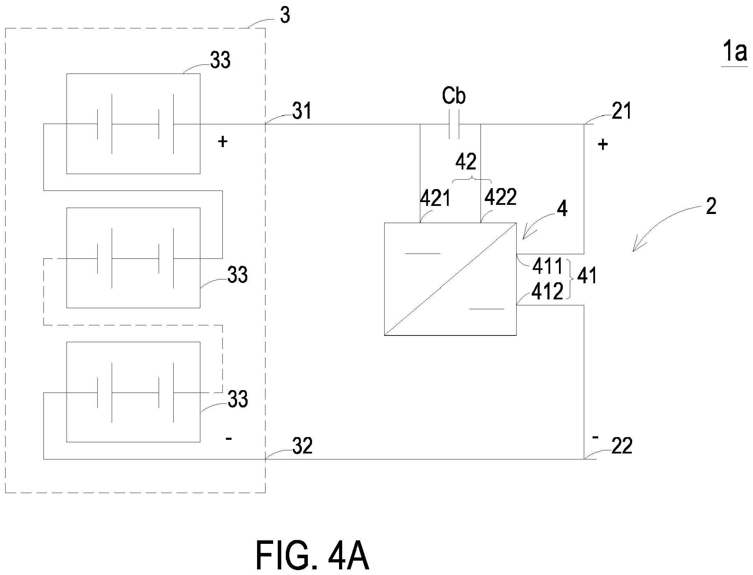

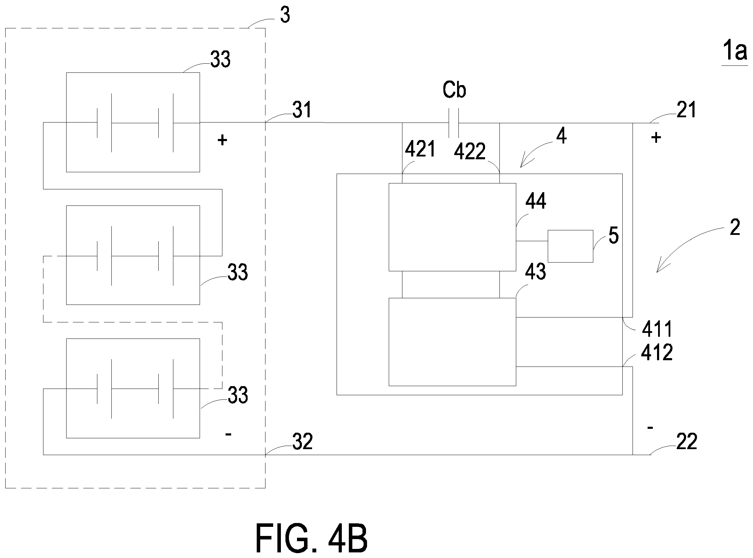

Please refer to FIGS. 4A and 4B. FIG. 4A is a schematic circuit diagram illustrating an energy storage module according to a second embodiment of the present disclosure. FIG. 4B is a schematic circuit diagram illustrating a series compensation DC conversion device of the energy storage module. In comparison with the energy storage module 1 of FIG. 1A, the first conduction terminal 41 of the energy storage module 1a of this embodiment is electrically connected with the bus connection part 2. In the energy storage module 1a of this embodiment, the first positive terminal 411 of the first conduction terminal 41 is electrically connected with the positive bus connection terminal 21 of the bus connection part 2, and the first negative terminal 412 of the first conduction terminal 41 is electrically connected with the negative bus connection terminal 22 of the bus connection part 2. In this embodiment, the charging current or the discharging current of the first battery pack 3 is equal to the current flowing through the second conduction terminal 42 of the series compensation DC conversion device 4. Moreover, the current flowing through the second conduction terminal 42 is controlled by the four-quadrant DC/DC converter 44 to make the current flowing through the first battery pack 3 be equal to a set value. The compensation voltage across the capacitor Cb is generated under control of the four-quadrant DC/DC converter 44. The value of the compensation voltage may be positive or negative.

Please refer to FIGS. 3 and 4A again. In case that the energy storage module 1 is operated in the constant current mode, the second comparator 517 receives the current I3 through the second conduction terminal 42 of the series compensation DC conversion device 4 under control of the control unit 5. The current I3 flowing through the second conduction terminal 42 of the series compensation DC conversion device 4 is compared with the current ramp given value by the second comparator 517. Consequently, a comparison current Ierr is generated. The second proportional controller 518 receives and calculates the comparison current Ierr. The second amplitude limiter 519 receives the calculated comparison current Ierr from the second proportional controller 518 and limits the amplitude of the calculated comparison current Ierr. Consequently, a duty cycle d is obtained. According to the duty cycle d, the on/off states of the switching element 520 of the four-quadrant DC/DC converter 44 are controlled to adjust the current flowing through the inductor 521 and control the current I3 flowing through the second conduction terminal 42 of the series compensation DC conversion device 4 to be a set value. That is, the current I1 flowing through the first battery pack 3 is adjusted to equal to a set value. In this embodiment, the set value is the current command Isp.

Please refer to FIGS. 3 and 4A again. In case that the energy storage module 1 is operated in the constant voltage mode, the second comparator 517 receives the current I3 flowing through the second conduction terminal 42 of the series compensation DC conversion device 4 under control of the control unit 5. The current I3 flowing through the second conduction terminal 42 of the series compensation DC conversion device 4 is compared with the limited given current from the first amplitude limiter 514 by the second comparator 517. Consequently, a comparison current Ierr is generated. The second proportional controller 518 receives and calculates the comparison current Ierr. The second amplitude limiter 519 receives the calculated comparison current Ierr from the second proportional controller 518 and limits the amplitude of the calculated comparison current Ierr. Consequently, a duty cycle d is obtained. According to the duty cycle d, the on/off states of the switching element 520 of the four-quadrant DC/DC converter 44 are controlled to adjust the current flowing through an inductor 521, and generate the compensation voltage Vcb of the capacitor Cb by the four-quadrant DC/DC converter 44.

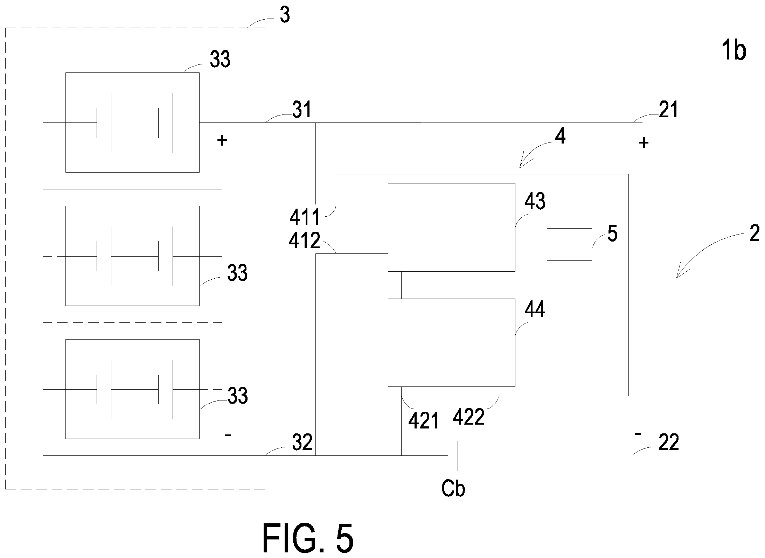

Please refer to FIG. 5. FIG. 5 is a schematic circuit diagram illustrating an energy storage module according to a third embodiment of the present disclosure. In comparison with the energy storage module 1 as shown in FIG. 1A, the capacitor Cb of the energy storage module 1b of this embodiment is electrically connected between the negative bus connection terminal 22 of the bus connection part 2 and the battery negative terminal 32 of the first battery pack 3. The second positive terminal 421 and the second negative terminal 422 of the second conduction terminal 42 of the series compensation DC conversion device 4 are electrically connected with the two terminals of the capacitor Cb, respectively. In case that the direction of the compensation voltage across the capacitor Cb and the direction of the voltage across the first battery pack 3 are identical, the second positive terminal 421 is electrically connected with the battery negative terminal 32 of the first battery pack 3, and the second negative terminal 422 is electrically connected with the negative bus connection terminal 22 of the bus connection part 2. In this embodiment, the current flowing through the first conduction terminal 41 and the current flowing through the second conduction terminal 42 are controlled by the four-quadrant DC/DC converter 44 to adjust the current flowing through the first battery pack 3 to be the set value. Similarly, the compensation voltage across the capacitor Cb is generated under control of the four-quadrant DC/DC converter 44, and the value of compensation voltage may be positive or negative.

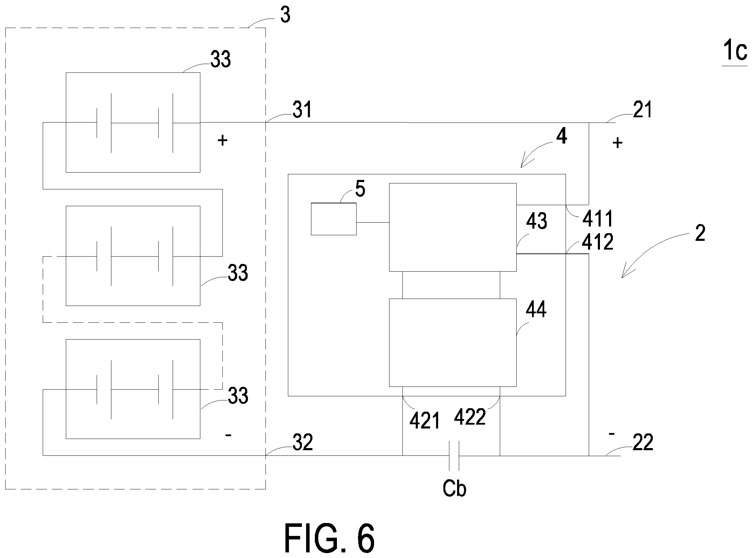

Please refer to FIG. 6. FIG. 6 is a schematic circuit diagram illustrating an energy storage module according to a fourth embodiment of the present disclosure. In comparison with the energy storage module 1 of FIG. 1A, the first conduction terminal 41 of the energy storage module 1c of this embodiment is electrically connected with the bus connection part 2. That is, the first positive terminal 411 of the first conduction terminal 41 is electrically connected with the positive bus connection terminal 21 of the bus connection part 2, and the first negative terminal 412 of the first conduction terminal 41 is electrically connected with the negative bus connection terminal 22 of the bus connection part 2. In addition, the capacitor Cb of the energy storage module 1c of this embodiment is electrically connected between the negative bus connection terminal 22 of the bus connection part 2 and the battery negative terminal 32 of the first battery pack 3. In this embodiment, the charging current or the discharging current of the first battery pack 3 is equal to the current flowing through the second conduction terminal 42 of the series compensation DC conversion device 4. The second positive terminal 421 and the second negative terminal 422 of the second conduction terminal 42 of the series compensation DC conversion device 4 are electrically connected with the two terminals of the capacitor Cb, respectively. In case that the direction of the compensation voltage across the capacitor Cb and the direction of the voltage across the first battery pack 3 are identical, the second positive terminal 421 is electrically connected with the battery negative terminal 32 of the first battery pack 3, and the second negative terminal 422 is electrically connected with the negative bus connection terminal 22 of the bus connection part 2. In this embodiment, the current flowing through the second conduction terminal 42 is controlled by the four-quadrant DC/DC converter 44 to adjust the current flowing through the first battery pack 3 to be the set value. Similarly, the compensation voltage across the capacitor Cb is generated under control of the four-quadrant DC/DC converter 44, and the value of compensation voltage may be positive or negative.

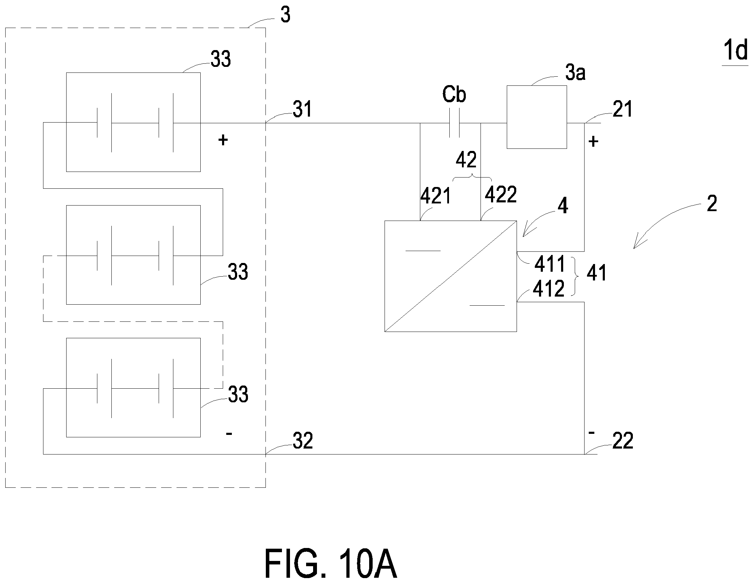

Please refer to FIG. 10A. FIG. 10A is a schematic circuit diagram illustrating an energy storage module according to a fifth embodiment of the present disclosure. In comparison with the energy storage module 1a as shown in FIG. 4A, the energy storage module 1d of this embodiment further includes a second battery pack 3a. The constituent of the second battery pack 3a is similar to that of the first battery pack 3, and not redundantly described herein. In this embodiment, the second battery pack 3a is electrically connected between the capacitor Cb and the positive bus connection terminal 21. The compensation voltage across the capacitor Cb is generated under control of the four-quadrant DC/DC converter 44. The voltage of the first battery pack 3 and the voltage of the second battery pack 3a are compensated according to the compensation voltage.

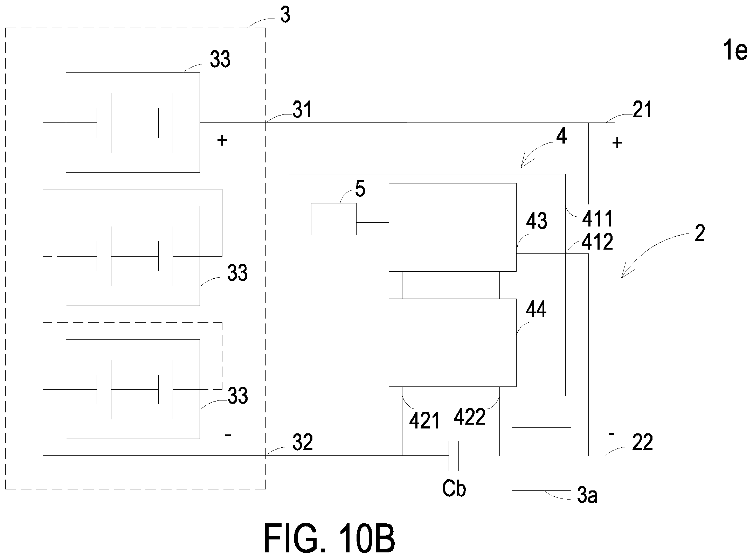

Please refer to FIG. 10B. FIG. 10B is a schematic circuit diagram illustrating an energy storage module according to a sixth embodiment of the present disclosure. In comparison with the energy storage module 1c as shown in FIG. 6, the energy storage module 1e of this embodiment further includes a second battery pack 3a. The constituent of the second battery pack 3a is similar to that of the first battery pack 3, and not redundantly described herein. In this embodiment, the second battery pack 3a is electrically connected between the capacitor Cb and the negative bus connection terminal 22. The compensation voltage across the capacitor Cb is generated under control of the four-quadrant DC/DC converter 44. The voltage of the first battery pack 3 and the voltage of the second battery pack 3a are compensated according to the compensation voltage.

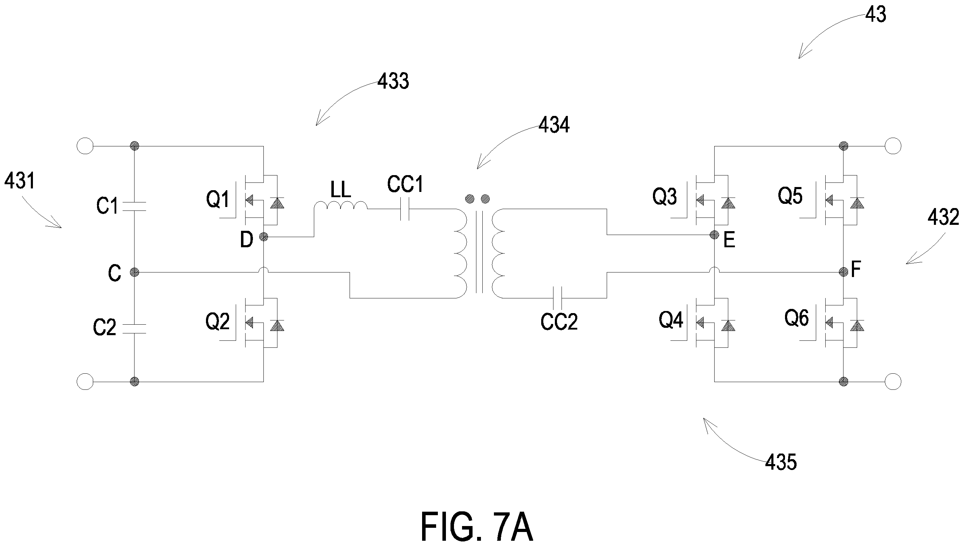

FIG. 7A is a schematic circuit diagram illustrating a first exemplary circuitry topology of the bidirectional isolation-type converter in the series compensation DC conversion device of the energy storage module as shown in FIG. 1A. In this embodiment, the bidirectional isolation-type converter 43 is a CLLC conversion circuit. The bidirectional isolation-type converter 43 includes a first terminal 431, a second terminal 432, a primary circuit 433, a transformer 434 and a secondary current 435. The CLLC conversion circuit is a bidirectional LLC circuit for achieving the soft switch function. Consequently, the switching loss of the switches in the bidirectional isolation-type converter 43 can be reduced.

In an embodiment, the first terminal 431 of the bidirectional isolation-type converter 43 is electrically connected with the first conduction terminal 41 of the series compensation DC conversion device 4, and the second terminal 432 of the bidirectional isolation-type converter 43 is electrically connected with the four-quadrant DC/DC converter 44. In another embodiment, the first terminal 431 of the bidirectional isolation-type converter 43 is electrically connected with the four-quadrant DC/DC converter 44, and the second terminal 432 of the bidirectional isolation-type converter 43 is electrically connected with the first conduction terminal 41 of the series compensation DC conversion device 4.

In this embodiment, the primary circuit 433 is a half-bridge conversion circuit. The primary circuit 433 includes two primary capacitors C1 and C2, two primary switches Q1 and Q2, a resonant inductor LL and a first resonant capacitor CC1. The two primary capacitors C1 and C2 are connected in series to collaboratively form a third bridge arm. In addition, a connection node between the two primary capacitors C1 and C2 is a third node C. The third node C is electrically connected with the second terminal of the primary winding of the transformer 434. The two primary switches Q1 and Q2 are connected in series to collaboratively form a fourth bridge arm. The fourth bridge arm and the third bridge arm are connected with each other in parallel. In addition, a connection node between the two primary switches Q1 and Q2 is a fourth node D. The resonant inductor LL and the first resonant capacitor CC1 are serially connected between the fourth node D and the first terminal of the primary winding of the transformer 434.

In this embodiment, the secondary circuit 435 for example is a full-bridge conversion circuit. In addition, the secondary circuit 435 includes four secondary switches Q3, Q4, Q5, Q6 and a second resonant capacitor CC2. The two secondary switches Q3 and Q4 are connected to collaboratively form a fifth bridge arm. In addition, a connection node between the two secondary switches Q3 and Q4 is a fifth node E. The fifth node E is electrically connected with the first terminal of the secondary winding of the transformer 434. The two secondary windings Q5 and Q6 are connected in series to collaboratively form a sixth bridge arm. The sixth bridge arm and the fifth bridge arm are connected with each other in parallel. In addition, a connection node between the two secondary windings Q5 and Q6 is a sixth node F. The second resonant capacitor CC2 is electrically connected between the sixth node F and the second terminal of the secondary winding of the transformer 434.

In this embodiment, the voltage transformation ratio in the first terminal 431 and the second terminal 432 of the bidirectional isolation-type converter 43 is nearly fixed. The switching frequency of the bidirectional isolation-type converter 43 is in the range between 90% and 110% of the resonant frequency of the first resonant capacitor CC1, the second resonant capacitor CC2 and the resonant inductor LL. In an embodiment, the switching frequency of the bidirectional isolation-type converter 43 is equal to the resonant frequency of the first resonant capacitor CC1, the second resonant capacitor CC2 and the resonant inductor LL. Consequently, the constant frequency control function of the bidirectional isolation-type converter 43 can be achieved. It is noted that the examples of the primary circuit 433 and the secondary current 435 are not restricted. For example, in another embodiment, the primary circuit 433 is a full-bridge conversion circuit, and/or the secondary current 435 is a half-bridge conversion circuit.

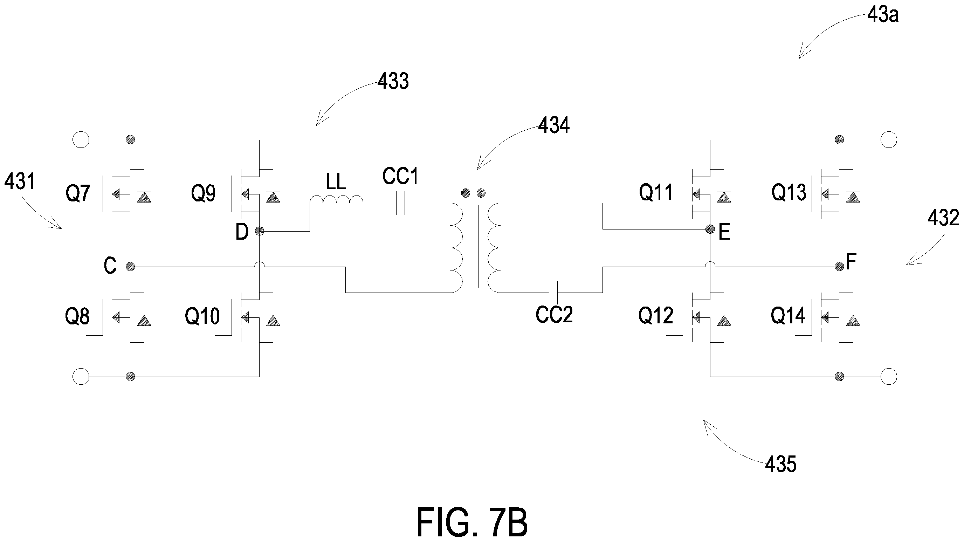

FIG. 7B is a schematic circuit diagram illustrating a second exemplary circuitry topology of the bidirectional isolation-type converter in the series compensation DC conversion device of the energy storage module as shown in FIG. 1A. The circuitry topology of the primary circuit 433 of the bidirectional isolation-type converter 43a in this embodiment is distinguished from the circuitry topology of the primary circuit 433 of FIG. 7A. In this embodiment, the primary circuit 433 of the bidirectional isolation-type converter 43a includes four primary switches Q7, Q8, Q9 and Q10. The two primary switches Q7 and Q8 are connected in series to collaboratively form the third bridge arm. The two primary switches Q9 and Q10 are connected in series to collaboratively form the fourth bridge arm. In this embodiment, the secondary circuit 435 of the bidirectional isolation-type converter 43a includes four secondary switches Q11, Q12, Q13 and Q14. The two four secondary switches Q11 and Q12 are connected in series to collaboratively form the fifth bridge arm. The two four secondary switches Q13 and Q14 are connected in series to collaboratively form the sixth bridge arm. The operations of the secondary switches Q11, Q12, Q13 and Q14 are similar to the operations of the secondary switches Q3, Q4, Q5 and Q6 in the secondary circuit 435 of the bidirectional isolation-type converter 43 as shown in FIG. 7A, and not redundantly described herein.

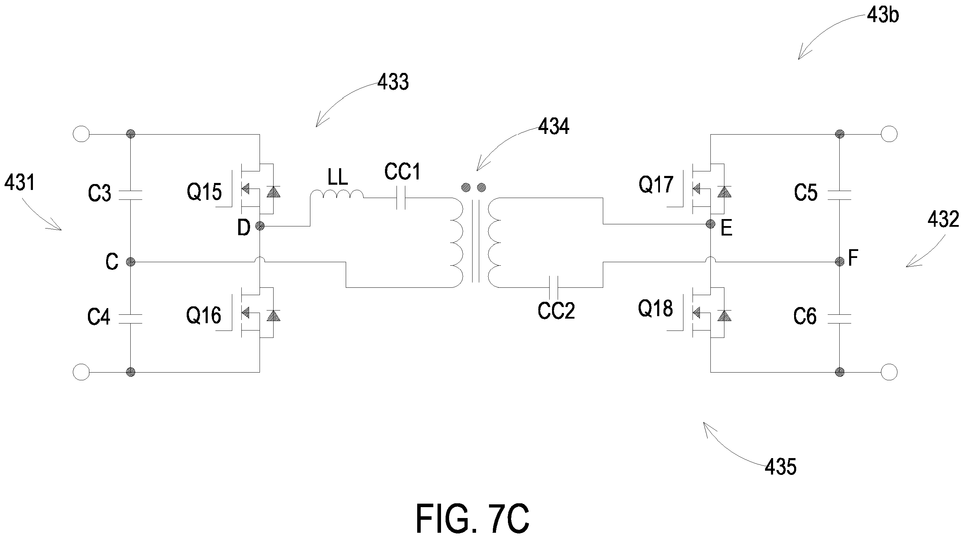

FIG. 7C is a schematic circuit diagram illustrating a third exemplary circuitry topology of the bidirectional isolation-type converter in the series compensation DC conversion device of the energy storage module as shown in FIG. 1A. The circuitry topology of the secondary circuit 435 of the bidirectional isolation-type converter 43b in this embodiment is distinguished from the circuitry topology of the secondary circuit 435 of FIG. 7A. In this embodiment, the secondary circuit 435 of the bidirectional isolation-type converter 43b includes two secondary switches Q17 and Q18 and two secondary capacitors C5 and C6. The two secondary switches Q17 and Q18 are connected in series to collaboratively form the fifth bridge arm. The two secondary capacitors C5 and C6 are connected in series to collaboratively form the sixth bridge arm. The primary circuit 433 of the bidirectional isolation-type converter 43b includes two primary capacitors C3 and C4 and two primary switches Q15 and Q16. The two primary capacitors C3 and C4 are connected in series to collaboratively form the third bridge arm. The two primary switches Q15 and Q16 are connected in series to collaboratively form the fourth bridge arm. The operations of the secondary capacitors C3, C4 and the primary switches Q15, Q16 are similar to the operations of the secondary capacitors C1, C2 and the primary switches Q1, Q2 in the secondary circuit 435 of the bidirectional isolation-type converter 43 as shown in FIG. 7A, and not redundantly described herein.

FIG. 8A is a schematic circuit diagram illustrating a first exemplary circuitry topology of the four-quadrant DC/DC converter in the series compensation DC conversion device of the energy storage module as shown in FIG. 1A. In this embodiment, the four-quadrant DC/DC converter 44 includes a first terminal 441, a second terminal 442, four switches (i.e., a first switch S1, a second switch S2, a third switch S3 and a fourth switch S4) and a first conversion inductor L1. The first terminal 441 of the four-quadrant DC/DC converter 44 is electrically connected with the bidirectional isolation-type converter 43. The positive terminal of the second terminal 442 of the four-quadrant DC/DC converter 44 is electrically connected with the second positive terminal 421 of the second conduction terminal 42 of the series compensation DC conversion device 4. The negative terminal of the second terminal 442 of the four-quadrant DC/DC converter 44 is electrically connected with the second negative terminal 422 of the second conduction terminal 42 of the series compensation DC conversion device 4. The two switches S1 and S2 are connected in series to collaboratively form a first bridge arm. A connection node between the two switches S 1 and S2 is a first node A. The first conversion inductor L1 is electrically connected between the first node A and the positive terminal of the second terminal 442 of the four-quadrant DC/DC converter 44. That is, the first conversion inductor L1 is electrically connected between the first node A and the second positive terminal 421 of the second conduction terminal 42. The two switches S3 and S4 are connected in series to collaboratively form a second bridge arm. A connection node between the two switches S3 and S4 is the second node B. The second node B is electrically connected with the negative terminal of the second terminal 442 of the four-quadrant DC/DC converter 44. In an embodiment, the four-quadrant DC/DC converter 44 further includes a conversion capacitor Ct. The conversion capacitor Ct is electrically connected between the positive terminal and the negative terminal of the second terminal 442 of the four-quadrant DC/DC converter 44. In an embodiment, the function of the conversion capacitor Ct is achieved by the capacitor Cb of FIG. 1A. In other words, the capacitor Cb is integrated into the four-quadrant DC/DC convert 44. In some embodiments, the four-quadrant DC/DC converter of the energy storage module is a parallel-connected structure of a plurality of four-quadrant DC/DC converters 44 as shown in FIG. 8A.

FIG. 8B is a schematic circuit diagram illustrating a second exemplary circuitry topology of the four-quadrant DC/DC converter in the series compensation DC conversion device of the energy storage module as shown in FIG. 1A. In comparison with the four-quadrant DC/DC converter 44 of FIG. 8A, the four-quadrant DC/DC converter 44a of this embodiment further includes a second conversion inductor L2. The second conversion inductor L2 is electrically connected between the second node B and the negative terminal of the second terminal 442 of the four-quadrant DC/DC converter 44 (i.e., the second conversion inductor L2 is electrically connected between the second node B and the second negative terminal 422). In some embodiments, the four-quadrant DC/DC converter of the energy storage module is a parallel-connected structure of a plurality of four-quadrant DC/DC converters 44a as shown in FIG. 8B.

It is noted that numerous modifications and alterations may be made while retaining the teachings of the disclosure. For example, in another embodiment, the first conversion inductor L1 is electrically connected between the first node A and the negative terminal of the second terminal 442. That is, the first conversion inductor L1 is electrically connected between the first node A and the second negative terminal 422 of the second conduction terminal 42. Under this circumstance, the second conversion inductor L2 is electrically connected between the second node B and the positive terminal of the second terminal 442. That is, the second conversion inductor L2 is electrically connected between the second node B and the second positive terminal 421 of the second conduction terminal 42.

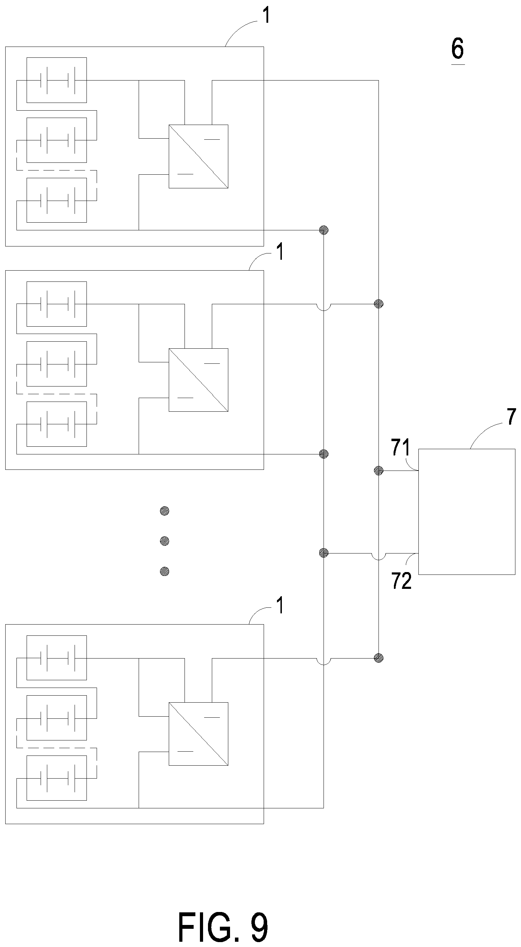

FIG. 9 is a schematic circuit diagram illustrating an energy storage system according to an embodiment of the present disclosure. As shown in FIG. 9, the energy storage system 6 includes a power conversion device 7 and a plurality of energy storage modules. Each of the plurality of energy storage modules have the circuitry topology of the energy storage module in any of the above embodiments. For example, the energy storage system 6 includes the power conversion device 7 and a plurality of energy storage modules 1 of the first embodiment. The power conversion device 7 has a power positive terminal 71 and a power negative terminal 72. The positive bus connection terminal 21 of the bus connection part 2 in each energy storage module 1 is electrically connected with the power positive terminal 71. The negative bus connection terminal 22 of the bus connection part 2 in each energy storage module 1 is electrically connected with the power negative terminal 72. According to the compensation voltage from the series compensation DC conversion device, the voltage across the two terminals of the first battery pack are compensated. Consequently, the voltages of the plurality of energy storage modules connected with the DC bus will be substantially consistent. Due to the special design of the energy storage module, the charging/discharging efficiency of the energy storage system 6 will be enhanced, and the circulating current between different energy storage modules will be avoided.

From the above descriptions, the present disclosure provides the energy storage module and the energy storage system. The energy storage module includes the series compensation DC conversion device. The first conduction terminal of the series compensation DC conversion device is electrically connected with the positive bus connection terminal and the negative bus connection terminal, or the first conduction terminal of the series compensation DC conversion device is electrically connected with the battery positive terminal and the battery negative terminal of the first battery pack. The second conduction terminal of the series compensation DC conversion device is electrically connected with two terminals of the capacitor. The four-quadrant DC/DC of the series compensation DC conversion device converter controls the capacitor to generate the compensation voltage. According to the compensation voltage, the voltage between the battery positive terminal and the battery negative terminal of the first battery pack is compensated, or a current flowing through the first battery pack is adjusted to a set value.

When compared with the one-way value, the value of the compensation voltage may be positive or negative according to the technology of the present disclosure. Consequently, the power loss is reduced, and the operating efficiency is enhanced. Moreover, the compensation voltage across the capacitor is relatively lower than the voltage across the two terminals of the first battery pack. In case that the current flowing through the first battery pack by using the series compensation DC conversion device (i.e., the present technology) and the current flowing through the battery pack by using the full-power converter (i.e., the prior technology) are identical, the conversion power used by the series compensation DC conversion device is relatively lower. When the connecting method and the controlling method of the energy storage module of the present disclosure are used, the power loss and the conversion power are reduced. Consequently, the overall performance and the reliability of the energy storage module are enhanced. The current flowing through the battery pack is adjusted to the set value under control of the series compensation DC conversion device. That is, the charging current or the discharging current of the battery pack is controlled to lie within a reasonable range of a charge/discharge curve. Consequently, the battery pack can be rapidly charged or discharged, and the lifespan of the battery pack can be extended.

## Claims

1. An energy storage module (1, 1a, 1b, 1c, 1d, 1e), **characterized by** comprising:
a capacitor (Cb);
a bus connection part (2) comprising a positive bus connection terminal (21) and a negative bus connection terminal (22);
a first battery pack (3) electrically coupled between the positive bus connection terminal (21) and the negative bus connection terminal (22), wherein the first battery pack (3) comprises a battery positive terminal (31) and a battery negative terminal (32); and
a series compensation DC conversion device (4) comprising a first conduction terminal (41), a second conduction terminal (42), a bidirectional isolation-type converter (43, 43a, 43b) and a four-quadrant DC/DC converter (44, 44a), wherein the first conduction terminal (41) comprises a first positive terminal (411) and a first negative terminal (412), and the second conduction terminal (42) comprises a second positive terminal (421) and a second negative terminal (422), wherein the first positive terminal (411) and the first negative terminal (412) are respectively connected with the positive bus connection terminal (21) and the negative bus connection terminal (22), or the first positive terminal (411) and the first negative terminal (412) are respectively connected with the battery positive terminal (31) and the battery negative terminal (32), wherein the second positive terminal (421) and the second negative terminal (422) are respectively connected with two terminals of the capacitor (Cb), the bidirectional isolation-type converter (43, 43a, 43b) is electrically connected with the first conduction terminal (41), and the four-quadrant DC/DC converter (44, 44a) is electrically connected between the bidirectional isolation-type converter (43, 43a, 43b) and the second conduction terminal (42), wherein the four-quadrant DC/DC converter (44, 44a) controls the capacitor (Cb) to generate a compensation voltage (Vcb) to compensate a voltage between the battery positive terminal (31) and the battery negative terminal (32) of the first battery pack (3), or the four-quadrant DC/DC converter (44, 44a) adjusts a current (I1) flowing through the first battery pack (3) to a set value;
wherein the capacitor (Cb) electrically coupled between the positive bus connection terminal (21) and the battery positive terminal (31), or electrically coupled between the negative bus connection terminal (22) and the battery negative terminal (32).

2. The energy storage module (1, 1a, 1b, 1c, 1d, 1e) according to claim 1, wherein the first conduction terminal (41) of the series compensation DC conversion device (4) is a high voltage side of the series compensation DC conversion device (4), and the second conduction terminal (42) of the series compensation DC conversion device (4) is a low voltage side of the series compensation DC conversion device (4).

3. The energy storage module (1) according to claim 1, wherein the capacitor (Cb) is electrically connected between the positive bus connection terminal (21) and the battery positive terminal (31), the first positive terminal (411) of the first conduction terminal (41) is electrically connected with the battery positive terminal (31), and the first negative terminal (412) of the first conduction terminal (41) is electrically connected with the battery negative terminal (32); or
the capacitor (Cb) is electrically connected between the negative bus connection terminal (22) and the battery negative terminal (32), the first positive terminal (411) of the first conduction terminal (41) is electrically connected with the battery positive terminal (31), and the first negative terminal (412) of the first conduction terminal (41) is electrically connected with the battery negative terminal (32).

4. The energy storage module (1) according to claim 3, wherein a current (I2) flowing through the first conduction terminal (41) and a current (13) flowing through the second conduction terminal (42) are controlled by the four-quadrant DC/DC converter (44, 44a), so that the current (I1) flowing through the first battery pack (3) is adjusted to the set value.

5. The energy storage module (1) according to claim 3, wherein the series compensation DC conversion device (4) further comprises a control unit (5), and the control unit (5) is electrically connected with the four-quadrant DC/DC converter (44, 44a), wherein the control unit (5) comprises a first ramp controller (511), a first comparator (512), a first proportional controller (513), a first amplitude limiter (514), a selector (516), a second comparator (517), a second proportional controller (518) and a second amplitude limiter (519),
wherein if the energy storage module (1) is operated in a constant voltage mode, the first ramp controller (511) receives a voltage command (Vsp) and converts the voltage command (Vsp) into a voltage ramp given value, the first comparator (512) compares the voltage ramp given value with the compensation voltage (Vcb) and generates an error voltage (Verr), the first proportional controller (513) generates a given current according to the error voltage (Verr), the first amplitude limiter (514) limits an amplitude of the given current, and the selector (516) receives the limited given current from the first amplitude limiter (514), the second comparator (517) compares a current (I2) flowing through the first conduction terminal (41), a current (I3) flowing through the second conduction terminal (42) with the limited given current and generates a first comparison current (Ierr), wherein the second proportional controller (518) receives and calculates the first comparison current (Ierr), and the second amplitude limiter (519) limits an amplitude of the calculated first comparison current (Ierr) from the second proportional controller (518), so that a first duty cycle (d) is obtained, wherein on/off states of at least one switch in the four-quadrant DC/DC converter (44, 44a) are controlled according to the first duty cycle (d),
wherein when if the energy storage module (1) is operated in a constant current mode, the series compensation DC conversion device (4) further comprises a second ramp controller (515), the second ramp controller (515) receives a current command (Isp) and converts the voltage command (Vsp) into a current ramp given value, and the selector (516) receives the current ramp given value from the second ramp controller (515), the second comparator (517) compares a current flowing through the first conduction terminal (41), a current (I3) flowing the second conduction terminal (42) with the current ramp given value and generates a second comparison current (Ierr), wherein the second proportional controller (518) receives and calculates the second comparison current (Ierr), and the second amplitude limiter (519) limits an amplitude of the calculated second comparison current (Ierr) from the second proportional controller (518), so that a second duty cycle (d) is obtained, wherein on/off states of at least one switch in the four-quadrant DC/DC converter (44, 44a) are controlled according to the second duty cycle (d).

6. The energy storage module (1a) according to claim 1, wherein the capacitor (Cb) is electrically connected between the positive bus connection terminal (21) and the battery positive terminal (31), the first positive terminal (411) of the first conduction terminal (41) is electrically connected with the positive bus connection terminal (21), and the first negative terminal (412) of the first conduction terminal (41) is electrically connected with the negative bus connection terminal (22) ; or
the capacitor (Cb) is electrically connected between the negative bus connection terminal (22) and the battery negative terminal (32), the first positive terminal (411) of the first conduction terminal (41) is electrically connected with the positive bus connection terminal (21), and the first negative terminal (412) of the first conduction terminal (41) is electrically connected with the negative bus connection terminal (22).

7. The energy storage module (1a) according to claim 6, wherein a current (I3) flowing through the second conduction terminal (42) is controlled by the four-quadrant DC/DC converter (44, 44a), so that the current (I1) flowing through the first battery pack (3) is adjusted to the set value.

8. The energy storage module (1a) according to claim 6, wherein the series compensation DC conversion device (4) further comprises a control unit (5), and the control unit (5) is electrically connected with the four-quadrant DC/DC converter (44, 44a), wherein the control unit (5) comprises a first ramp controller (511), a first comparator (512), a first proportional controller (513), a first amplitude limiter (514), a selector (516), a second comparator (517), a second proportional controller (518) and a second amplitude limiter (519),
wherein if the energy storage module (1a) is operated in a constant voltage mode, the first ramp controller (511) receives a voltage command (Vsp) and converts the voltage command (Vsp) into a voltage ramp given value, the first comparator (512) compares the voltage ramp given value with the compensation voltage (Vcb) and generates an error voltage (Verr), the first proportional controller (513) generates a given current according to the error voltage (Verr), the first amplitude limiter (514) limits an amplitude of the given current, and the selector (516) receives the limited given current from the first amplitude limiter (514), the second comparator (517) compares a current (13) flowing through the second conduction terminal (42) with the limited given current and generates a first comparison current (Ierr), wherein the second proportional controller (518) receives and calculates the first comparison current (Ierr), and the second amplitude limiter (519) limits an amplitude of the calculated first comparison current (Ierr) from the second proportional controller (518), so that a first duty cycle (d) is obtained, wherein on/off states of at least one switch in the four-quadrant DC/DC converter (44, 44a) are controlled according to the first duty cycle (d), wherein when if the energy storage module (1a) is operated in a constant current mode, the series compensation DC conversion device (4) further comprises a second ramp controller (515), the second ramp controller (515) receives a current command (Isp) and converts the current command (Isp) into a current ramp given value, and the selector (516) receives the current ramp given value from the second ramp controller (515), the second comparator (517) compares a current (13) flowing the second conduction terminal (42) with the current ramp given value and generates a second comparison current (Ierr), wherein the second proportional controller (518) receives and calculates the second comparison current (Ierr), and the second amplitude limiter (519) limits an amplitude of the calculated second comparison current (Ierr) from the second proportional controller (518), so that a second duty cycle (d) is obtained, wherein on/off states of at least one switch in the four-quadrant DC/DC converter (44, 44a) are controlled according to the second duty cycle (d).

9. The energy storage module (1, 1a, 1b, 1c, 1d, 1e) according to claim 1, wherein the capacitor (Cb) is integrated into the four-quadrant DC/DC converter (44, 44a).

10. The energy storage module (1, 1a, 1b, 1c, 1d, 1e) according to claim 1, wherein the bidirectional isolation-type converter (43, 43a, 43b) is a CLLC conversion circuit,
wherein bidirectional isolation-type converter (43, 43a, 43b) comprises at least one resonant capacitor (CC1) and at least one resonant inductor (LL), wherein a switching frequency of the bidirectional isolation-type converter (43, 43a, 43b) is in a range between 90% and 110% of a resonant frequency of the at least one resonant capacitor (CC1) and the at least one resonant inductor (LL),
wherein the bidirectional isolation-type converter (43, 43a, 43b) comprises a primary circuit (433), a transformer (434) and a secondary circuit, wherein each of the primary circuit (433) and the secondary circuit is a full-bridge conversion circuit or a half-bridge conversion circuit.

11. The energy storage module (1, 1a, 1b, 1c, 1d, 1e) according to claim 1, wherein the four-quadrant DC/DC converter (44, 44a) is a full-bridge conversion circuit, and the full-bridge conversion circuit comprising:
a first bridge arm comprising a first switch (S1) and a second switch (S2) connected in series, wherein a connection node between the first switch (S1) and the second switch (S2) is a first node (A);
a second bridge arm comprising a third switch (S3) and a fourth switch (S4) connected in series, wherein a connection node between the third switch (S3) and the fourth switch (S4) is a second node (B); and
a first conversion inductor (L1) electrically connected between the first node (A) and the second positive terminal (421) or electrically connected between the first node (A) and the second negative terminal (422);
wherein the four-quadrant DC/DC converter (44a) further comprises a second conversion inductor (L2), wherein if the first conversion inductor (L1) is electrically connected between the first node (A) and the second positive terminal (421), the second conversion inductor (L2) is electrically connected between the second node (B) and the second negative terminal (422), wherein if the first conversion inductor (L1) is electrically connected between the first node (A) and the second negative terminal (422), the second conversion inductor (L2) is electrically connected between the second node (B) and the second positive terminal (421).

12. The energy storage module (1, 1a, 1b, 1c, 1d, 1e) according to claim 1, wherein the energy storage module (1, 1a, 1b, 1c, 1d, 1e) is selectively operated in a charging mode or a discharging mode.

13. The energy storage module (1, 1a, 1b, 1c, 1d, 1e) according to claim 1, wherein if the voltage between the battery positive terminal (31) and the battery negative terminal (32) of the first battery pack (3) is compensated according to the compensation voltage (Vcb), a direction of the voltage between the battery positive terminal (31) and the battery negative terminal (32) of the first battery pack (3) and a direction of the compensation voltage (Vcb) are identical or opposite.

14. The energy storage module (1, 1a, 1b, 1c, 1d, 1e) according to claim 1, wherein the series compensation DC conversion device (4) further comprises a control unit (5), and the control unit (5) is electrically connected with the four-quadrant DC/DC converter (44, 44a), wherein if the energy storage module (1, 1a, 1b, 1c, 1d, 1e) is operated in a constant current mode, the control unit (5) receives a current command (Isp), and the current flowing through the first battery pack (3) is adjusted to the set value according to the current command (Isp), wherein if the energy storage module (1, 1a, 1b, 1c, 1d, 1e) is operated in a constant voltage mode, the control unit (5) receives a voltage command (Vsp), and the compensation voltage (Vcb) is generated on the capacitor (Cb) according to the voltage command (Vsp).

15. The energy storage module (1, 1a, 1b, 1c, 1d, 1e) according to claim 6, wherein the energy storage module (1, 1a, 1b, 1c, 1d, 1e) further comprises a second battery pack (3a),
wherein the second battery pack (3a) is electrically connected between the capacitor (Cb) and the positive bus connection terminal (21), wherein the four-quadrant DC/DC converter (44, 44a) control the capacitor (Cb) to generate the compensation voltage (Vcb), and the voltage between the battery positive terminal (31) and the battery negative terminal (32) of the first battery pack (3) and a voltage between a battery positive terminal (31) and a battery negative terminal (32) of the second battery pack (3a) are compensated according to the compensation voltage (Vcb); or
wherein the second battery pack (3a) is electrically connected between the capacitor (Cb) and the negative bus connection terminal (22), wherein the four-quadrant DC/DC converter (44, 44a) control the capacitor (Cb) to generate the compensation voltage (Vcb), and the voltage between the battery positive terminal (31) and the battery negative terminal (32) of the first battery pack (3) and a voltage between a battery positive terminal (31) and a battery negative terminal (32) of the second battery pack (3a) are compensated according to the compensation voltage (Vcb).
